(19) Europäisches Patentamt
European Patent Office
Office européen des brevets

(11) **EP 1 497 553 B1**

(12) **EUROPÄISCHE PATENTSCHRIFT**

(45) Veröffentlichungstag und Bekanntmachung des Hinweises auf die Patenterteilung:
**13.01.2010 Patentblatt 2010/02**

(21) Anmeldenummer: **03717167.5**

(22) Anmeldetag: **02.04.2003**

(51) Int Cl.:
*F02M 51/06* (2006.01)     *F16K 31/00* (2006.01)
*H01L 41/053* (2006.01)

(86) Internationale Anmeldenummer:
**PCT/DE2003/001092**

(87) Internationale Veröffentlichungsnummer:
**WO 2003/089781 (30.10.2003 Gazette 2003/44)**

(54) **DOSIERVORRICHTUNG FÜR FLUIDE, INSBESONDERE KRAFTFAHRZEUG-EINSPRITZVENTIL**

DOSING DEVICE FOR FLUIDS, ESPECIALLY A MOTOR VEHICLE INJECTION VALVE

DISPOSITIF DE DOSAGE POUR FLUIDES, NOTAMMENT SOUPAPE D'INJECTION D'AUTOMOBILE

(84) Benannte Vertragsstaaten:
**DE FR GB IT**

(30) Priorität: **22.04.2002  DE 10217882**

(43) Veröffentlichungstag der Anmeldung:
**19.01.2005   Patentblatt 2005/03**

(73) Patentinhaber: **Continental Automotive GmbH**
**30165 Hannover (DE)**

(72) Erfinder:
• **FISCHER, Bernhard**
  **84513 Töging A. Inn (DE)**
• **GOTTLIEB, Bernhard**
  **81739 München (DE)**
• **KAPPEL, Andreas**
  **85649 Brunnthal (DE)**
• **ULIVIERI, Enrico**
  **81541 München (DE)**

(56) Entgegenhaltungen:
**EP-A- 1 079 098     EP-A- 1 111 230**
**DE-A- 4 306 072     DE-A- 19 940 056**

**Beschreibung**

Die Erfindung betrifft eine Dosiervorrichtung zur Dosierung eines unter Druck stehenden Dosierfluids gemäß dem Oberbegriff des Patentanspruchs 1. Vorrichtungen dieser Art, im Weiteren auch als Dosier- oder Einspritzventil bezeichnet, weisen als Hauptkomponenten einen elektromechanischen Aktor, der eine Ventilnadel antreibt, und einen hydraulischen Längenkompensator auf und werden insbesondere als Einspritzventile für Brennkraftmaschinen verwendet.

Eine gattungsgemäße Vorrichtung ist bereits aus der DE 199 40 056 A1 bekannt.

In der Kraftfahrzeugtechnik werden zunehmend Einspritzsysteme eingesetzt, bei denen Kraftstoff unter hohem Druck an in den Zylindern angeordneten Einspritzventilen angelegt wird. Der Einspritzvorgang direkt in den Brennraum der Zylinder wird durch Öffnen und Schließen der Einspritzventile ausgelöst, wobei die Einspritzventile über moderne Aktoren angesteuert werden, die - um hohe Schaltgeschwindigkeiten und die damit zusammenhängenden bekannten Vorteile hinsichtlich Kraftstoffverbrauch und Abgasen zu erreichen - insbesondere nach dem piezoelektrischen Prinzip arbeiten.

Die den Stellweg der Ventilnadel generierenden axialen Längenänderungen der modernen Festkörper-Aktoren werden primär durch die kurze Expansion des Aktor-Körpers bei Anlegen einer Erregerspannung hervorgerufen. Andere Einflüsse, insbesondere Temperaturänderungen, führen jedoch ebenfalls zu Längenänderungen des Aktors, die allerdings vergleichsweise langsam stattfinden. Um trotz derartiger nicht-dynamischer Längenänderungen einen vorgegebenen konstanten Stellweg des Aktors und damit einen gleich bleibenden Ventilnadelhub zu gewährleisten, ist es bekannt, einen hydraulischen Längenkompensator in das Einspritzventil zu integrieren. Dieser umfasst im wesentlichen eine Hydraulikkammer, die gedrosselt hydraulisch mit einer Ausgleichskammer verbunden ist. Ein expandierender Piezoaktor bewirkt, dass ein Hydraulikkolben Druck auf die mit einer Arbeitsflüssigkeit gefüllte Hydraulikkammer ausübt. Bei schneller, dynamischer Expansion erlaubt die Drosselung keinen Druck- bzw. Flüssigkeitsausgleich, so dass sich Hydraulikkolben und Aktor auf dem Flüssigkeitspolster in der Hydraulikkammer abstützen, wodurch der Aktor bei Ventilbetätigung relativ zum Gehäuse festliegt. Bei langsamer Expansion hingegen kommt es zu einem Ausgleichsvorgang zwischen Hydraulikkammer und Ausgleichskammer, bis in den beiden Kammern gleich großer Druck herrscht und der Aktor wiederum - unter Kompensation seiner Längenänderung - gehäuseseitig festgelegt ist. Damit steht für erneute, kurzzeitige Ventilbetätigungen wieder der vollständige, konstante Stellweg zur Verfügung.

In der oben genannten DE 199 40 056 A1 ist ein Dosierventil beschrieben, dessen Besonderheit zum einen darin besteht, Hydraulikkolben und Hydraulikkammer des Längenkompensators hintereinander, an der der Ventilnadel gegenüberliegenden Stirnseite des Aktors, anzuordnen. Der Aktor ist innerhalb einer Arbeitskammer angebracht, die über ihre ganze (axiale) Länge als Ausgleichskammer dient und mit Arbeitsflüssigkeit befüllbar ist. Die Arbeitskammer kann dabei durch einen axialen Metallbalg in einen Aktor-Innenraum (mit Aktor, ohne Arbeitsflüssigkeit) und einen Aktor-Außenraum (hier: Ausgleichsraum mit Arbeitsflüssigkeit) in axialer Richtung getrennt sein.

Zum anderen ist das Längenkompensationssystem dieses bekannten Dosierventils nicht hydraulisch abgeschlossen und mit einer speziellen Hydraulikflüssigkeit als Arbeitsflüssigkeit befüllt. Vielmehr ist die Hydraulikkammer über die Arbeitskammer druckbefüllbar und die Arbeitskammer selbst ist gegenüber dem Ventilraum bzw. der Dosierfluid-Zuführung hydraulisch offen. Die Arbeitsflüssigkeit und der Grunddruck des Kompensationssystems sind also unmittelbar durch das Dosierfluid selbst als bzw. seinen über die Fluid-Zuleitung angelieferten Druck, hier: Kraftstoffdruck, gegeben. Dadurch kann die Hydraulikkammer mit einem zunehmend eingesetzten hohen Kraftstoffdruck von bis zu 300 bar beaufschlagt und der Aktor unter eine entsprechend hohe hydraulische Druckvorspannung gesetzt werden, die ihn vor schädlichen Zugspannungen im dynamischen Betrieb schützt. Die Hydraulikkammer wird durch den hohen Druck kavitationsfrei befüllbar und kann außerdem kurzfristig sehr hohe Zugkräfte aufnehmen, wie sie zum schnelleren Schließen der Dosieröffnung benötigt werden.

Aus der DE 198 38 862 A1 ist ein nicht gattungsgemäßes Einspritzventil mit Piezoaktor bekannt, bei dem das hydraulische Längenkompensationssystem unmittelbar durch einen im System vorgegebenen Grunddruck und zusätzlich mittelbar, unter Nutzung des Kraftstoffdruckes, druckbeaufschlagt ist. Der dortige Längenkompensator setzt konstruktiv eine Hydraulikkammer und einen Hydrospeicher (der teilweise die Funktionen einer Ausgleichskammer erfüllt) voraus, die beide ventilnadelseitig, außerhalb und getrennt vom Raum für den Aktor, angeordnet sind. Das Kompensationssystem ist gegenüber dem Kraftstoff hermetisch abgedichtet und mit einer unter einem Grunddruck, typischerweise 25 bar, stehenden Hydraulikflüssigkeit druckbefüllt. Der Hydrospeicher weist zu einem kraftstoffgefüllten Fluidraum hin eine mindestens teilweise flexible Außenwand auf, die in Art und Anordnung nicht näher definiert ist. Durch die Nachgiebigkeit der mindestens teilweise flexiblen Außenwand überlagert sich der an ihr anliegende Kraftstoffdruck additiv dem Grunddruck im Hydrospeicher. Der resultierende Gesamtdruck steht dann insbesondere als Druckvorspannung des Aktors zur Verfügung. Der zwischen dem Kompensationssystem und dem mit Kraftstoff gefüllten Fluidraum abfallende Differenzdruck gewährleistet eine vom Kraftstoffdruck unabhängige Schließkraft auf die Ventilnadel.

Aus der DE 43 06 072 A1 ist eine Dosiervorrichtung mit einem hydraulisch abgeschlossenen Hubtransformator mit integriertem Längenkompensator bekannt, bei dem der gesamte Grunddruck durch eine Trennmembran hindurch vom Dosierfluid auf die Hydraulikflüssigkeit übertragen wird. Der Aktor ist nicht innerhalb der Arbeitskammer des Längenkompensators angebracht.

Bei der Konstruktion eines verbesserten Einspritzventils, insbesondere eines Hochdruckeinspritzventils für direkteinspritzende Magermotoren mit einem piezoelektrischen Multilayer Aktuator (PMA) als Antriebselement, sind, optimalerweise, zusätzlich zu den bereits genannten Forderungen, folgende Anforderungen zu beachten, wobei jedoch die einzelnen Anforderungen oft in Konkurrenz zueinander stehen:

- weitgehende Beibehaltung der etablierten Bauformen,
- ausreichende Verlustwärmeabfuhr vom Aktor,
- hermetische Abdichtung des Aktors gegenüber dem zu dosierenden Kraftstoff,
- hohe mechanische Nachgiebigkeit, Druckfestigkeit, Leckagesicherheit im Dauerbetrieb sowie hinreichender Schutz der Dichtelemente vor Kraftstoffdruckoszillationen mit hoher Amplitude sollte gewährleistet sein,
- Kompensation der druckbedingten Kräfte, die direkt auf die Ventilnadel wirken oder die durch die mit der Ventilnadel mechanisch direkt verbundenen Elemente, wie die Dichtelemente, in die Ventilnadel eingeleitet werden,
- die hydraulische Längenkompensation soll die Funktion des Einspritzventils im typischen Temperaturintervall von -40°C bis +150°C gewährleisten und soll selbsttätig alle thermischen, alle durch Setzeffekte des Aktors hervorgerufenen, alle druckbedingten Längenänderungen und auch alle durch Fertigungstoleranzen hervorgerufenen Längenstreuungen ausgleichen, u. a. deshalb, um z. B. Stahl statt Invar als Material bei der Fertigung verwenden zu können,
- antriebsseitig sollten alle bewegten Teile durch Verschweißen auf Anlage gehalten werden können, so dass keine Hubverluste durch Spalte entstehen.

Aufgabe der vorliegenden Erfindung ist es, eine Dosiervorrichtung bereitzustellen, die das beschriebene Anforderungsprofil möglichst weitgehend erfüllt und vor allem eine Optimierung der hermetischen Abdichtung und der Wärmeableitung vom Aktor erlaubt. Die Vorteile einer hohen hydraulischen Druckvorspannung sollen bestehen bleiben, wobei der optimierte Längenkompensator insgesamt auf einfache Weise in die Dosiervorrichtung integrierbar sein muss.

Diese Aufgabe wird erfindungsgemäß durch eine Dosiervorrichtung gemäß Patentanspruch 1 gelöst. Vorteilhafte Ausgestaltungen sind den Unteransprüchen entnehmbar.

Erfindungsgemäß ist die Arbeitskammer durch eine hermetisch dichte Trennmembran in einen den Aktor enthaltenden Aktorraum und eine Fluidkammer getrennt, wobei die Fluidkammer mit dem Dosierfluid druckbefüllbar ist, während der Aktorraum und die Hydraulikkammer mit einer Hydraulikflüssigkeit als Arbeitsflüssigkeit gefüllt sind, so dass in der Hydraulikflüssigkeit durch den sich durch die Trennmembran hindurch übertragenden Druck des Dosierfluids ein Grunddruck erzeugbar ist.

Die Idee der Erfindung basiert demnach darauf, einen den Aktor enthaltenden Arbeitsraum nicht direkt mit Dosierfluid druckzubefüllen, sondern den Druck des Dosierfluids indirekt - über eine druckübertragende, den Arbeitsraum in einen Aktorraum und einen Fluidraum aufteilende, Trennmembran - zu nutzen, um ein hydraulisch abgeschlossenes Längenkompensationssystem mit einem sehr hohen Grunddruck zu beaufschlagen. Dadurch wird zunächst die Hydraulikkammer in die Lage versetzt, hohe Zugkräfte aufzunehmen. Hierdurch wird ein sehr schnelles Nadelschließen ermöglicht, ohne dass durch Trägheitskräfte Kavitation in der Hydraulikkammer entsteht. Der hohe Grunddruck erzeugt zudem eine ideale hydraulische Druckvorspannung des Aktors, also eine hohe Kraft bei verschwindender Federkonstante.

Die indirekte Druckbeaufschlagung des hydraulischen Kompensationssystems nach der Erfindung ermöglicht es, die etwaigen Nachteile eines direkten Kontakts von Aktor und Dosierfluid zu vermeiden, bzw. die Vorteile zu erreichen, die das Umschließen des Aktors mit einer speziellen Hydraulikflüssigkeit gegebenenfalls mit sich bringen kann. Dass den Aktor vorteilhafterweise umschließende Silikonöl verbessert die Abfuhr der Verlustwärme des Aktors an das Gehäuse des Einspritzventils und den Zylinderkopf.

Erfindungsgemäß ist der Grunddruck der Hydraulikflüssigkeit, meist: Silikonöl, annähernd nur durch den sich durch die Trennmembran hindurch übertragenden Druck des Dosierfluid, meist: Kraftstoff, erzeugt. Da demnach über die Trennmembran idealerweise kein Differenzdruck abfällt, kann sie mechanisch sehr flexibel ausgebildet werden, so dass sie nicht nur abdichtende und druckübertragende Funktionen erfüllt. Erfindungsgemäss ist, eine axial weiche Trennmembran vorgesehen, die an ihrem Innendurchmesser hermetisch dichtend mit der Ventilnadel und an ihrem Außendurchmesser hermetisch dichtend mit der Innenwand der Arbeitskammer verbunden ist. Die Trennmembran ist durch eine Doppelmetallbalganordnung gegeben.

Eine bevorzugte Ausführungsform lässt sich dadurch erreichen, dass die Ventilnadel im Bereich zwischen dem Fluidraum und der Dosieröffnung durch zwei enge Nadelführungen axial im Gehäuse geführt ist, dass die Ventilnadel im Bereich der dosieröffnungsseitigen Nadelführung Abflachungen aufweist, damit das von einer Fluid-Zuleitung angelieferte Dosierfluid ungehindert zur Dosieröffnung gelangen kann, dass die fluidraumseitige Nadelführung so eng ausgebildet ist, dass sie keine oder nur eine stark drosselnde hydraulische Verbindung zwischen der dosieröffnungsseitigen Nadelführung und dem Fluidraum zulässt, und dass das Dosierfluid mittels einer Abzweigung der Fluid-Zuleitung hin zum Fluidraum zu dessen Druckbefüllung anlieferbar ist. Hierdurch können sich die durch das schnelle Schalten des Ventils ausgelösten Druckwellen nicht in den Raum oberhalb der oberen Nadelführung fortpflanzen und dort z. B. die axial weiche Trennmembran schädigen.

In den folgenden Ausführungsbeispielen wird die Dosiervorrichtung anhand der Figuren der Zeichnung näher erläutert.

    Figur 1A zeigt ein direkt angetriebenes, nach außen öffnendes Einspritzventil,

    Figur 1B zeigt einen Querschnitt entlang der Linie A-A in Figur 1A,

    Figur 1C zeigt einen Querschnitt entlang der Linie B-B in Figur 1A,

    Figur 2 zeigt eine andere Ausführungsform des Einspritzventils gemäß Figur 1A.

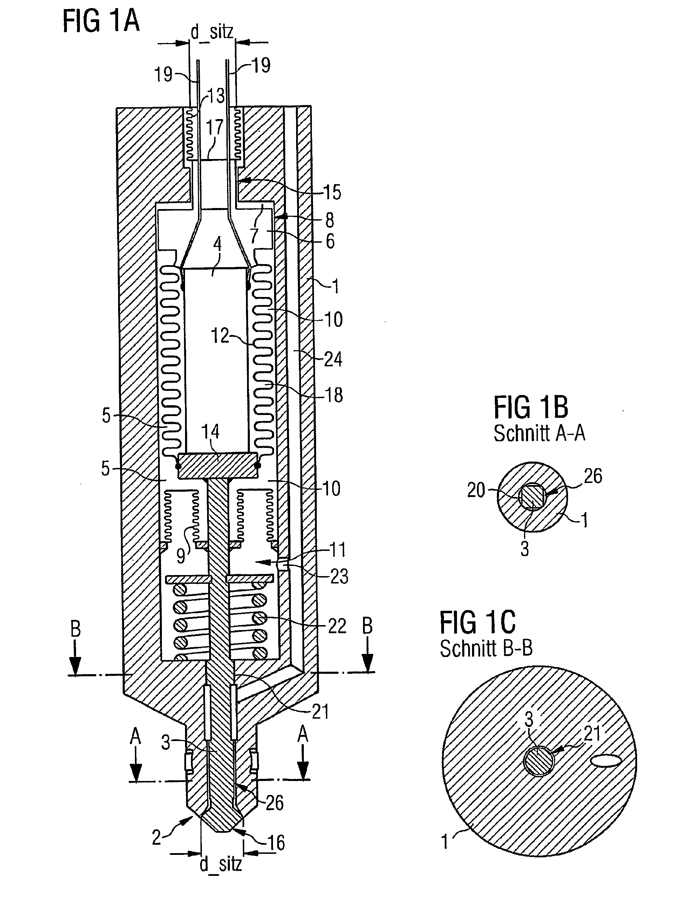

Figur 1A zeigt als Seitenansicht in geschnittener Darstellung ein Gehäuse 1 eines Einspritzventils. Die Dosieröffnung 2 ist durch die Ventilnadel 3 verschlossen; die Ventilnadel 3 und der sie antreibende Aktor 4 befinden sich in Ruhestellung. Der Aktor 4 ist innerhalb einer Arbeitskammer 5 des Gehäuses 1 angebracht und ist stirnseitig jeweils mit einer Endkappe versehen, wobei die obere Endkappe als axialverschiebbarer Hydraulikkolben 6 ausgebildet ist. Oberhalb des Hydraulikkolbens 6 ist die Hydraulikkammer 7 angeordnet, die durch eine erste Passung 8 zwischen Hydraulikkolben 6 und Gehäuse 1 mit der Arbeitskammer 5 gedrosselt hydraulisch verbunden ist, wobei die erste Passung 8 so ausgelegt ist, dass bei einer schnellen Längenänderung des Aktors 4 der Hydraulikkolben 6 relativ zum Gehäuse 1 feststeht.

Durch eine axial weiche Trennmembran 9, die an ihrem Innendurchmesser hermetisch dichtend mit der Ventilnadel 3 verbunden ist und an ihrem Außendurchmesser hermetisch dichtend mit der inneren Wand der Arbeitskammer 5 verbunden ist, wird der mit Kraftstoff gefüllte Fluidraum 11 vom mit Silikonöl gefüllten Aktorraum 10 abgetrennt. Die Trennmembran 9 sollte gleichzeitig drei Bedingungen genügen:

Sie sollte so ausgestaltet sein, dass sie die thermisch bedingten Volumenänderungen des Silikonöls im Aktorraum - die auch zu kleinen, unwesentlichen Änderungen des Grunddrucks führen können - durch Anpassung ihrer Form problemlos abfangen kann. Sie sollte dabei so flexibel sein, das dabei keine Kräfte in die Ventilnadel 3 eingeleitet werden. Weiterhin soll sie temperatur- und kraftstoffresistent sein. Diese Erfordernisse an die Trennmembran 9 können auf besonders einfache Weise durch die in Figur 1A dargestellte Doppelmetallbalganordnung erfüllt werden. Durch eine derartige Trennmembran 9 überträgt sich der Kraftstoffdruck verlustfrei auf das Silikonöl im Aktorraum 10.

Der hohe, im wesentlichen dem Kraftstoffdruck entsprechende Grunddruck im Längenkompensationssystem wirkt sich in mehrerer Hinsicht vorteilhaft aus. Eventuell beim Befüllen des Einspritzventils mit Silikonöl mit in die Hydraulikkammer 7 eingeschlossene Gasbläschen werden dadurch so stark komprimiert, dass sie die Steifigkeit der Hydraulikkammer 7 nicht mehr ungünstig beeinflussen können. Der Kraftstoffdruck im Silikonöl gewährleistet auch eine hinreichend hohe Druckvorspannung im Aktor 4, da gegebenenfalls zusätzlich zur mechanischen Druckvorspannung, beispielsweise durch einen Metallbalg 12, noch die hydraulische Druckvorspannung wirkt. Letztere berechnet sich aus der Differenz des hydraulisch wirksamen Querschnittes des Metallbalges 12 zur Aktor-Abdichtung und der hydraulisch wirksamen Fläche der oberen Metallbalgdurchführung 13 bzw. des Nadeldichtsitzes und kann bei typischen Kraftstoffdrükken bis zu 250 bar, bis zu 3000 N betragen. Handelsübliche Serienbälge insbesondere des Typs BE 39510 der Firma Witzenmann erfüllen bereits im wesentlichen die Erfordernisse an eine Aktor-Abdichtung.

Die Aktoreinheit besteht aus einem piezoelektrischen Multilayer Aktuator (PMA) 4, der inzwischen einer oberen und unteren Endkappe 14 hermetisch abgedichtet in einen ihn umfassenden Metallbalg 12 unter mechanischer Druckvorspannung eingeschweißt ist. Außer einem Vielschicht-Piezoaktor kann grundsätzlich auch jede andere Art von Festkörperaktuator, z. B. ein magnetostriktiver Aktor oder ein elektrostriktiver Aktor vorteilhaft als Ventilantrieb eingesetzt werden. Das an sich bekannte Verfahren zum Betreiben der erfindungsgemäßen Dosiervorrichtung beruht darauf, dass durch Anlegen eines elektrischen Signals der Aktor 4 in axialer Richtung so schnell gedehnt wird, dass er von der Hydraulikkammer 7 abgestützt wird, und durch die Dehnung des Aktors 4 die Ventilnadel 3 von der Dosieröffnung 2 abgehoben wird, so dass Fluid aus der Dosieröffnung 2 gesteuert abgebbar ist. Zur Beendigung des Dosiervorgangs wird der Aktor entladen und mindestens durch die Zugspannung des Metallbalgs 12 und der durch den Grunddruck im Aktorraum 10 gegebenen hydraulischen Druckvorspannung kontrahiert, wodurch die Ventilnadel 3 wieder dichtend von außen auf die Dosieröffnung 2 aufsetzt und die Abgabe von Fluid beendet wird.

Die obere Endkappe ist als gestufter Hydraulikkolben 6 ausgestaltet, der zusammen mit dem Gehäuse 1 die Hydraulikkammer 7 begrenzt. Die Doppelführung in Form zweier enger Spielpassungen 8 und 15 dichtet die Hydraulikkammer 7 in Form stark drosselnder fluidischer Verbindungen ab. Die obere Passung 15 mit möglichst kleinem Durchmesser dichtet die Hydraulikkammer 7 gegen den Raum ab, der die obere Metallbalgdurchführung 13 enthält. Die untere Passung mit möglichst großem Durchmesser dichtet die Hydraulikkammer 7 nach unten gegen das Volumen des Aktorraums 10 ab. Die Ringfläche zwischen kleinem und großem Passungsdurchmesser entspricht der hydraulisch wirksamen Hydraulikkolbenfläche. Gemäß:

$$c_K = a_K / k \cdot h_K$$

berechnet sich die Steifigkeit $C_K$ der Hydraulikkammer 7 aus der Kompressibilität k des Silikonöls, der wirksamen Kolbenfläche $a_K$ und der Kammerhöhe $h_K$. Daraus wird klar ersichtlich, dass eine große wirksame Kolbenfläche und eine geringe Kammerhöhe zu einer hohen Kammersteifigkeit führen. Typisch erreichbare Steifigkeitswerte für derartige Hydraulikkammern 7 liegen weit über 100 N/μm.

Die obere Metallbalgdurchführung 13, die an ihrem unteren Ende oberhalb der oberen engen Spielpassung 15 an der oberen Endkappe (Hydraulikkolben 6) und an ihrem oberen Ende am Gehäuse 1 hermetisch dichtend durch jeweils eine Schweißung befestigt ist, dichtet das unter Kraftstoffdruck stehende Silikonöl gegenüber dem Außenraum ab. Relativbewegungen zwischen oberer Endkappe und Gehäuse 1 werden durch den Metallbalg 13 nicht behindert. Der hydraulisch wirksame Durchmesser der oberen Metallbalgdurchführung 13 wird gleich dem dichtenden Durchmesser des aus unterem Ende der Ventilnadel 3 und Gehäuse 1 gebildeten Kegelsitzventil 16 gewählt (d$_{-Sitz}$). Hierdurch wird erreicht, dass auf die Gesamtheit der relativ zum Gehäuse beweglichen Teile (Ventilnadel 3 und Aktoreinheit mit oberer Endkappe 6), die durch den Kraftstoff und das unter Kraftstoffdruck stehende Silikonöl mit Kraftstoffdruck beaufschlagt sind, sich alle axial wirksamen Druckkräfte gegenseitig kompensieren und keine resultierende axiale Kraft zwischen Gehäuse 1 und den beweglichen Teilen entsteht.

Da einerseits durch die obere Metallbalgdurchführung 13 die obere Endfläche 17 der oberen Endkappe 6 direkt an den Außenraum angrenzt und andererseits eine untere Endfläche der oberen Endkappe 6 dem Aktor 4 im hermetisch gegen das Silikonöl abgedichteten Aktor-Innenraum 18 des Metallbalges 12 zugewandt ist, können die elektrischen Anschlüsse 19 des Aktors 4 durch Bohrungen in der Endkappe 6 einfach vom Aktor 4 in den Außenraum herausgeführt werden.

Die Ventilnadel 3 ist mit der unteren Endkappe 14 der Aktoreinheit z.B. durch eine Schweißung steif verbunden. Die Ventilnadel 3 wird durch zwei enge Passungen axial im Gehäuse 1 geführt. Im Bereich der unteren Nadelführung 26 (Schnitt A-A), vgl. Figur 1B, weist die Ventilnadelpassung Abflachungen 20 auf, damit der zugeführte Kraftstoff ungehindert zum Kegeldichtsitz 16 gelangen kann. Die obere Nadelführung 21 (Schnitt B-B), vgl. Figur 1C, dagegen kann vollzylindrisch ausgeführt werden, da der während der Einspritzung zum Kegeldichtsitz 16 fließende Kraftstoff hier nicht passieren muss. Es ist sogar wünschenswert, die obere Nadelführung 21 für den Kraftstoff stark drosselnd auszuführen, da sich hierdurch die durch das schnelle Schalten des Ventils ausgelösten Druckwellen nicht in den Raum oberhalb der oberen Nadelführung 21 fortpflanzen und z. B. die axial weiche Trennmembran 9 schädigen können. Die Fluidkammer 11 andererseits kann vorteilhaft durch eine Abzweigung 23 von der Fluid-Zuleitung 24 mit Kraftstoff druckbeaufschlagt werden.

Im Ruhezustand des Einspritzventils wird das aus dem unteren Ventilnadelende und dem unteren Ende des Gehäuses 1 gebildete Kegelsitzventil 16 durch eine Nadelrückstellfeder 22, die sich einerseits am Gehäuse 1 und andererseits an der Ventilnadel 3 abstützt, geschlossen gehalten.

Es resultiert insgesamt eine Dosiervorrichtung, die weiterhin folgende Vorteile aufweist:

Ein einfacher Aufbau des hydraulischen Kondensators mit wenigen Funktionsbestandteilen ist ebenso möglich, wie eine perfekte Kompensation der statischen Druckkräfte. Der Druck im Aktorraum 10 entlastet nicht den Ventilsitz. Zur verbesserten Verlustwärmeabfuhr kann gegebenenfalls auch der Aktor-Innenraum 18 mit Silikonöl aufgefüllt werden. Die obere Metallbalgdurchführung 13, an der die volle Druckdifferenz vom Kraftstoffdruck zur Umgebung abfällt, ist mehrfach durch enge Spielpassungen von den am Kegelsitz beim Einspritzvorgang durch schnelles Öffnen und Schließen ausgelösten Druckwellen abgekoppelt, welche den Metallbalg stark beanspruchen können. Ferner ist sie nicht Lastspielen der Ventilnadelbewegung unterworfen. Sie gleicht nur die Relativbewegung zwischen oberem Gehäuseteil und oberer Endkappe 6 aus, die beispielsweise durch Temperaturänderungen oder Kraftstoffdruckänderungen hervorgerufen wird. Die Trennmembran 9 ist den Lastspielen der Ventilnadelbewegung zwar ausgesetzt, sie ist aber keiner Belastung durch Druckdifferenzen unterworfen. Die elektrischen Anschlüsse 19 können, wie bereits erwähnt, bequem ohne Hochdruckabdichtung durch die Endkappe 6 nach außen geführt werden.

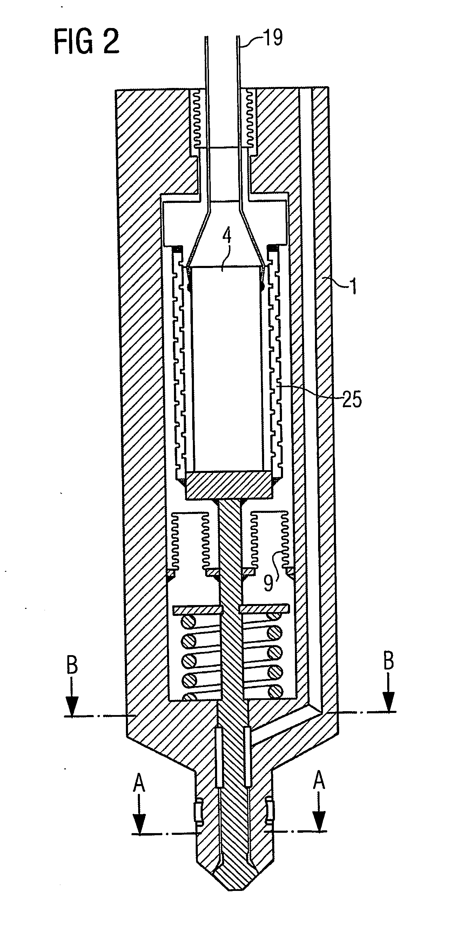

Figur 2 zeigt eine Ausführung der erfindungsgemäßen Dosiervorrichtung mit einer an sich bekannten Rohrfeder 25, in die der Aktor 4 eingebracht ist und durch die er (kraftstoffdruck-unabhängig) druckvorgespannt wird. Die Rohrfeder 25 ersetzt in diesem Falle demnach den Metallbalg 12. Bei dieser Ausführung muss allerdings die Herausführung der Anschlüsse 19 hochdruckdicht erfolgen. Die vom Aktor 4 erzeugte Verlustwärme kann jedoch vorteilhafterweise noch wesentlich besser abgeführt werden. Außerdem besitzen Silikonöle auch funkenlöschende Eigenschaften, die der Dauerstandfestigkeit des Aktors 4, der bei Feldstärken von bis zu 2 KV/mm betrieben wird, zugute kommen.

Die Vorspannkraft ist größtenteils wesentlich geringer als im hydraulischen Fall, was zu einer verringerten elektrischen Energie- und Leistungsaufnahme des Aktors beim Schalten führt.

**Patentansprüche**

1. Dosiervorrichtung zur Dosierung eines unter Druck stehenden Dosierfluids, aufweisend:

   - ein Gehäuse (1) mit einer Dosieröffnung (2), die mittels einer Verschiebung einer Ventilnadel (3) steuerbar ist,
   - einen in axialer Richtung längenveränderbaren elektromechanischen Aktor (4), der innerhalb einer Arbeitskammer (5) des Gehäuses (1) angebracht ist, und der an seiner einen Stirnseite mit der Ventilnadel (3) und an seiner anderen Stirnseite mit einem axialverschiebbaren Hydraulikkolben (6) verbunden ist,
   - eine Hydraulikkammer (7), die durch eine erste Passung (8) zwischen Hydraulikkolben (6) und Gehäuse (1) mit der Arbeitskammer (5) gedrosselt hydraulisch verbunden ist, wobei die erste Passung (8) so ausgelegt ist, dass bei einer schnellen Längenänderung des Aktors (4) der Hydraulikkolben (6) relativ zum Gehäuse (1) feststeht,
   - wobei die Arbeitskammer (5) und die Hydraulikkammer (7) mit einer Arbeitsflüssigkeit befüllbar sind,

   **dadurch gekennzeichnet,**

   - **dass** die Arbeitskammer (5) durch eine hermetisch dichte Trennmembran (9) in einen den Aktor (4) enthaltenden Aktorraum (10) und eine Fluidkammer (11) getrennt ist,
   - **dass** die Fluidkammer (11) mit dem Dosierfluid druckbefüllbar ist, während der Aktorraum (10) und die Hydraulikkammer (7) mit einer Hydraulikflüssigkeit als Arbeitsflüssigkeit gefüllt sind,
   - **dass** in der Hydraulikflüssigkeit durch den sich durch die Trennmembran (9) hindurch übertragenden Druck des Dosierfluids ein Grunddruck erzeugbar ist,
   - wobei als Trennmembran (9) eine durch eine Doppelmetallbalganordnung gegebene, axial weiche Trennmembran (9) vorgesehen ist, die an ihrem Innendurchmesser hermetisch dichtend mit der Ventilnadel (3) und an ihrem Außendurchmesser hermetisch dichtend mit der Innenwand der Arbeitskammer (5) verbunden ist.

2. Dosiervorrichtung nach Anspruch 1, **dadurch gekennzeichnet,**

   - **dass** die Ventilnadel (3) im Bereich zwischen dem Fluidraum (11) und der Dosieröffnung (2) durch zwei enge Nadelführungen (21, 26) axial im Gehäuse (1) geführt ist,
   - **dass** die Ventilnadel (3) im Bereich der dosieröffnungsseitigen Nadelführung (26) Abflachungen (20) aufweist, damit das von einer Fluid-Zuleitung (24) angelieferte Dosierfluid ungehindert zur Dosieröffnung (2) gelangen kann,
   - **dass** die fluidraumseitige Nadelführung (21) so eng ausgebildet ist, dass sie keine oder nur eine stark drosselnde hydraulische Verbindung zwischen der dosieröffnungsseitigen Nadelführung (26) und dem Fluidraum (11) zulässt,
   - und **dass** das Dosierfluid mittels einer Abzweigung (23) der Fluid-Zuleitung (24) hin zum Fluidraum (11) zu dessen Druckbefüllung anlieferbar ist.

3. Dosiervorrichtung nach einem der Ansprüche 1 bis 2,
   **dadurch gekennzeichnet, dass** der Aktor (4) innerhalb eines in axialer Richtung flexiblen Metallbalges (12) angeordnet ist, welcher im Bereich der ventilnadelseitigen Stirnseite des Aktors (4) und am Hydraulikkolben (6) dichtend befestigt ist, und der den Aktorraum (10) in einen Aktor-Innenraum (18) und einen mit Hydraulikflüssigkeit gefüllten Aktor-Außenraum (11) teilt.

4. Dosiervorrichtung nach Anspruch 3,
   **dadurch gekennzeichnet, dass** auch der Aktor-Innenraum (18) mit Hydraulikflüssigkeit gefüllt ist.

5. Dosiervorrichtung nach einem der Ansprüche 1 bis 2,
   **dadurch gekennzeichnet, dass** der Aktor (4) in eine Rohrfeder (25) eingebracht ist und von dieser druckvorgespannt wird.

**Claims**

1. Dosing device for dosing a pressurised dosing fluid, comprising:

   - a housing (1) having a dosing orifice (2) which is controllable by means of a displacement of a valve needle (3),
   - an electromechanical actuator (4) of variable length in the axial direction which is installed inside a working chamber (5) of the housing (1) and which is connected at one of its end faces to the valve needle (3) and at its other end face to an axially displaceable hydraulic piston (6),
   - a hydraulic chamber (7) which is hydraulically connected in a throttled manner to the working chamber (5) by means of a first fit (8) between hydraulic piston (6) and housing (1), with the first fit (8) being embodied in such a way that the hydraulic piston (6) retains its position relative to the housing (1) if there is a rapid change in the length of the actuator (4),

- wherein the working chamber (5) and the hydraulic chamber (7) can be filled with a working fluid,

**characterised in that**

- the working chamber (5) is divided by means of a hermetically tight separating membrane (9) into an actuator chamber (10) containing the actuator (4) and a fluid chamber (11),
- the fluid chamber (11) can be filled under pressure with the dosing fluid, whilst the actuator chamber (10) and the hydraulic chamber (7) are filled with a hydraulic fluid as the working fluid,
- a base pressure can be generated in the hydraulic fluid by means of the pressure of the dosing fluid being transmitted through the separating membrane (9),
- wherein as the separating membrane (9) there is provided an axially soft separating membrane (9) which is embodied by means of a double metal bellows arrangement which at its inside diameter is connected in a hermetically sealing manner to the valve needle (3) and at its outside diameter is connected in a hermetically sealing manner to the inner wall of the working chamber (5).

**2.** Dosing device according to claim 1, **characterised in that**

- the valve needle (3) is guided axially in the housing (1) through two narrow needle ducts (21, 26) in the region between the fluid chamber (11) and the dosing orifice (2),
- the valve needle (3) has flattened sections (20) in the region of the needle duct (26) on the dosing orifice side so that the dosing fluid which is supplied from a fluid feed line (24) can make its way unobstructed to the dosing orifice (2),
- the needle duct (21) on the fluid chamber side is embodied to be so narrow as to allow either no hydraulic link or only a highly throttling hydraulic link between the needle duct (26) on the dosing orifice side and the fluid chamber (11),
- and the dosing fluid can be supplied for the purpose of pressure-filling the fluid chamber (11) by means of a branch (23) from the fluid feed line (24) to said fluid chamber (11).

**3.** Dosing device according to one of claims 1 to 2, **characterised in that** the actuator (4) is disposed inside a metal bellows (12) which is flexible in the axial direction and is secured in a sealing manner in the region of the end face of the actuator (4) on the valve needle side and at the hydraulic piston (6), and which divides the actuator chamber (10) into an inner actuator chamber (18) and an outer actuator chamber (11) filled with hydraulic fluid.

**4.** Dosing device according to claim 3, **characterised in that** the inner actuator chamber (18) is also filled with hydraulic fluid.

**5.** Dosing device according to one of claims 1 to 2, **characterised in that** the actuator (4) is inserted into a Bourdon spring tube (25) and is compressively pre-tensioned by same.

**Revendications**

**1.** Dispositif de dosage destiné à doser un fluide à doser sous pression, comportant :

- un boîtier (1) avec un orifice de dosage (2), qui peut être commandé par le déplacement d'un pointeau de soupape (3),
- un actionneur (4) électromécanique, de longueur modifiable dans la direction axiale, qui est logé à l'intérieur d'une chambre de travail (5) du boîtier (1) et qui, au niveau de l'une de ses faces frontales, est relié au pointeau de soupape (3) et, au niveau de son autre face frontale, est relié à un piston hydraulique (6) déplaçable axialement,
- une chambre hydraulique (7) qui, à travers un premier passage (8) entre le piston hydraulique (6) et le boîtier (1), est reliée par voie hydraulique de section réduite à la chambre de travail (5), le premier passage (8) étant dimensionné de telle sorte que, lors d'une variation rapide de la longueur de l'actionneur (4), le piston hydraulique (6) est immobilisé par rapport au boîtier (1),
- la chambre de travail (5) et la chambre hydraulique (7) pouvant être remplies d'un liquide de travail,

**caractérisé**

- **en ce que** la chambre de travail (5) est séparée, par une membrane de séparation (9) hermétiquement étanche, en un compartiment d'actionneur (10) contenant l'actionneur (4) et un compartiment de fluide (11),
- **en ce que** le compartiment de fluide (11) peut être rempli sous pression avec le fluide à doser, alors que le compartiment d'actionneur (10) et la chambre hydraulique (7) sont remplis avec un liquide hydraulique formant le liquide de travail,
- **en ce que** dans le liquide hydraulique peut être générée une pression de base sous l'effet de la pression du fluide à doser, transmise à travers la membrane de séparation (9),
- sachant que pour former la membrane de séparation (9), il est prévu une membrane de séparation (9) souple dans le sens axial, formée par un système de double soufflet métallique, laquelle, au niveau de son diamètre intérieur, est reliée de manière hermétiquement étanche avec le pointeau de soupape (3) et, au niveau de son diamètre extérieur, est reliée de manière hermétiquement étanche avec la paroi intérieure de la chambre de travail (5).

2. Dispositif de dosage selon la revendication 1, **caractérisé**

 - **en ce que** le pointeau de soupape (3) est guidé axialement dans le boîtier (1) pour deux guidages (21, 26) étroits dans la zone entre le compartiment de fluide (11) et l'orifice de dosage (2),
 - **en ce que** le pointeau de soupape (3), dans la zone du guidage (26) du côté de l'orifice de dosage, comporte des méplats (20) afin que le fluide à doser, amené par une conduite d'acheminement du fluide (24), puisse parvenir sans obstacle vers l'orifice de dosage (2),
 - **en ce que** le guidage (21) du côté du compartiment de fluide est si étroit qu'il n'autorise pas de liaison hydraulique ou seulement une liaison hydraulique ayant une section fortement réduite entre le guidage (26) du côté de l'orifice de dosage et le compartiment de fluide (11),
 - et **en ce que** le fluide à doser peut être acheminé, via un embranchement (23) de la conduite d'acheminement du fluide (24), vers le compartiment de fluide (11) en vue de son remplissage sous pression.

3. Dispositif de dosage selon l'une des revendications 1 à 2, **caractérisé en ce que** l'actionneur (4) est disposé à l'intérieur d'un soufflet métallique (12) flexible dans la direction axiale, qui est fixé de manière étanche dans la zone de la face frontale de l'actionneur (4) du côté du pointeau de soupape et sur le piston hydraulique (6), et qui sépare le compartiment d'actionneur (10) en un compartiment intérieur de l'actionneur (18) et un compartiment extérieur de l'actionneur (11) rempli du fluide hydraulique.

4. Dispositif de dosage selon la revendication 3, **caractérisé en ce que** le compartiment intérieur (18) de l'actionneur est également rempli de fluide hydraulique.

5. Dispositif de dosage selon l'une des revendications 1 à 2, **caractérisé en ce que** l'actionneur (4) est logé dans un tube-ressort (25) et est précontraint en pression par celui-ci.

## FIG 1A

d_sitz

19 — 13

17

— 15

4 — 7 — 8
— 6

— 1

12 — 10

— 24

— 18

5 —

14

5 —
— 10

9
— 11

— 23

22

B — B

21

A — A

3 —

26

2 —
— 16

d_sitz

## FIG 1B
Schnitt A-A

20 — 26
— 1
3

## FIG 1C
Schnitt B-B

3 — 21
1

FIG 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19940056 A1
- DE 19838862 A1
- DE 4306072 A1